# EUROPEAN PATENT SPECIFICATION

(11) **EP 4 091 878 B1**
(45) Date of publication and mention of the grant of the patent: **30.10.2024**
(21) Application number: 22181382.7
(22) Date of filing: 11.11.2021
(51) Int. Cl.: B60P 3/06, B60P 3/073

(54) **FLAT BED TRAILER**
FLACHBETTANHÄNGER
REMORQUE-PLATEAU

(30) Priority: 11.11.2020 GB 202017763
(43) Date of publication of application: 23.11.2022
(62) Divisional of application: 21207764.8
(73) Proprietor: WHC Hire Services Holdings Ltd, Gloucestershire GL51 4GA (GB)
(72) Inventor: Clutterbuck, James Hopkins, Worcester (GB)
(74) Representative: Wynne-Jones IP Limited

(56) References cited:
- AU-A4- 2009 101 330
- GB-A- 2 430 918
- GB-A- 2 521 252
- GB-A- 2 583 009

## Description

This invention relates to a flat bed trailer for transporting an item of heavy machinery. In particular this invention relates to a flat bed trailer for transporting an item of heavy machinery, such as an excavator, having a movable arm attached to a bucket or a breaker.

It is well known to transport items of heavy machinery, such as plant machinery, mechanical diggers, excavators and forklift devices, using a flat bed trailer. Traditionally, the item of heavy machinery is positioned on the trailer and straps are used to secure it in place. However, the use of straps is less than desirable because the item of heavy machinery may not be secured in place very effectively. Indeed, the present inventors are aware of at least one fatality caused by an item of heavy machinery that fell from a flat bed trailer during transportation.

WO2007/129054 discloses a flat bed trailer for transporting heavy machinery, the trailer comprising a plurality of restraining bars disposable substantially laterally across the trailer from one side wall to the other side wall to restrain the item of heavy machinery. AU2009101330 also discloses a flat bed trailer comprising a plurality of lateral restraining bars.

In both WO2007/129054 and AU2009101330, the lateral restraining bars are secured to the side walls of the trailer at an upper surface of the side walls, and bar retainers which retain the lateral restraining bars are located above the upper surface of the side walls. It is desirable to improve the safety and ease of use of such restraint systems.

The present invention, in at least some of its embodiments, seeks to address the above described problems, desires and needs. In particular, embodiments of the present invention seek to provide a flat bed trailer with improved safety.

According to the present invention there is provided a flat bed trailer for transporting an item of heavy machinery having a moveable arm attached to a bucket or a breaker, the flat bed trailer comprising:
a floor,
a plurality of wheels for travel over roads;
a coupling mechanism for coupling the trailer to a towing vehicle;
at least two restraining bars each having a restraining position in which the respective restraining bar is disposed substantially laterally across the trailer to restrain the item of heavy machinery when positioned on the flat bed trailer;
a first bar retainer for retaining one of the restraining bars in its restraining position;
a second bar retainer for releasably retaining the other restraining bar in its restraining position; and
a breaker housing for receiving and restraining the breaker of the item of heavy machinery,
wherein the breaker housing is mounted to the floor of the trailer via a support prop.

The breaker housing may comprise an elongate channel for receiving and restraining the breaker. The channel may be a tapering elongate channel.

The breaker housing may comprise a fastening mechanism for releasably retaining the breaker within the breaker housing.

The fastening mechanism of the breaker housing can be substantially of the same design as the fastening mechanism of the arm restraint assembly. For example, the fastening mechanism can comprise a locking pin, which may comprise an elongate shaft or rod.

The locking pin may comprise a substantially cylindrical shaft. The locking pin may comprise an elongate handle at one end of the shaft. The elongate handle may extend substantially perpendicularly to the shaft.

The locking pin may be rotatable between a locked configuration and a release configuration.

The breaker housing may comprise apertures for receiving the locking pin in its release configuration

In the locking configuration, the locking pin may engage with the breaker housing to retain the locking pin in position.

The shaft may comprise one or more protrusions extending radially outward.

In the locked configuration, the locking pin (e.g. the one or more protrusions of the locking pin) engages with the breaker housing to retain the locking pin in position. In the release configuration the locking pin may be disengaged from the breaker housing so that the locking pin can be removed.

The locking pin may be biased towards the locked configuration. For example, the weight of the elongate handle can provide a moment which causes the locking pin to naturally reside in a particular rotational orientation, which can correspond to the locked configuration.

According to a first non-claimed example there is provided a flat bed trailer for transporting an item of heavy machinery comprising:
a floor;
a plurality of wheels for travel over roads;
a coupling mechanism for coupling the trailer to a towing vehicle;
a pair of longitudinally extending side walls, wherein each of the side walls in the pair has an inward face;
a first restraining bar and a second restraining bar, the first and second restraining bars each having a restraining position in which the respective restraining bar extends substantially laterally across the trailer between the pair of longitudinally extending side walls to restrain the item of heavy machinery when the item of heavy machinery is positioned on the trailer, wherein the restraining position of the first restraining bar is disposed nearer to the coupling mechanism than the restraining position of the second restraining bar;
a first bar retainer for retaining the first restraining bar in its restraining position; and
a second bar retainer coupled to at least one of the side walls for releasably retaining the second restraining bar in its restraining position;
wherein the first restraining bar is received by the first bar retainer at an inward face of at least one of the side walls in the pair of longitudinally extending side walls.

The first bar retainer can be coupled to the inward face of at least one of the side walls. The first bar retainer can be located at an inward face of at least one of the side walls.

It is understood that flat bed trailers do not have high sided walls. The side walls of the present invention typically extend less than one metre and commonly less than 500 mm above the level of the trailer floor. The side walls can extend at least 300 mm above the level of the floor. Coupling the first bar retainer to the inward face of at least one of the longitudinally extending side walls so that the first restraining bar is received by the first bar retainer at an inward face of at least one side wall. The first bar retainer can be located at an inward face of at least one of the side walls, which allows the restraining bar to be lower than those of the prior art. This helps to minimise or eliminate a trip hazard caused by the bar retainer protruding above the top of the side wall. The first bar retainer is disposed nearer to the coupling mechanism than the second bar retainer.

The first and second restraining bars can be a pair of spaced apart restraining bars. The first and second restraining bars can be spaced apart by at least 750 mm.

The first restraining bar can be fully detachable from the trailer. The first bar retainer can releasably retain the first restraining bar in its restraining position. The first restraining bar can be fully removable from the first bar retainer. This can help with storage and can remove a potential trip hazard when the restraining bar is not being used. Alternatively, one or both ends of the first restraining bar can be permanently attached to the first bar retainer.

The first restraining bar can have an adjustable height. For example, the first restraining bar can be movable (e.g. slidable) relative to the first bar retainer so as to adjust the vertical position of the first restraining bar relative to the first bar retainer and relative to the side walls of the trailer. This can help to provide an improved restraining mechanism for a wider range of heavy machinery, thereby improving safety. Alternatively, the first restraining bar can have a fixed height relative to the first retainer when in its restraining position.

The first bar retainer can comprise a pair of bar receiving elements. Each of the bar receiving elements in the pair can be coupled to different side walls. Each of the bar receiving elements can be suitable for receiving a respective end of the first restraining bar in its restraining position. The bar receiving elements can comprise a sleeve or collar for receiving a respective end of the first restraining bar in its restraining position. The pair of bar receiving elements can be a pair of brackets. One or each of the bar receiving elements can be coupled to an inward face of one of the side walls. One or each of the first bar receiving can be located at an inward face of one of the side walls.

The first restraining bar can be couplable with the first bar retainer. For example, the first restraining bar can be fixed in its restraining position using a bolt or lynch pin, for example, a lynch pin extending through the bar receiving element and the restraining bar (e.g. via aligned apertures).

The pair of longitudinally extending side walls and the first bar retainer each have a top. The top of the first bar retainer (or any of the bar receiving elements of the first bar retainer and/or any part of the first bar retainer used to couple the first bar retainer to the side walls) can be substantially level with or lower than the top of the pair of longitudinally extending side walls. Optionally, the first bar retainer (or any bar receiving elements of the first bar retainer and/or any part of the first bar retainer used to couple the first bar retainer to the side walls) does not protrude above the top of the side wall. This provides a bar retaining means which is lower, more compact and less likely to cause injury as a trip hazard. When the first restraining bar is retained in the first bar retainer, the first restraining bar or a substantial portion of the first restraining bar can substantially level with or higher than the top of the pair of longitudinally extending side walls. Alternatively, the first restraining bar can be below lower than the top of the pair of longitudinally extending side walls.

The first restraining bar can comprise a forward deviation for receiving a part of the heavy machinery when positioned on the flat bed trailer. The forward deviation can be substantially V-shaped, U-shaped, curved, concave, box-shaped, or any other similar shape. The forward deviation provides a recess into which a part of heavy machinery, such as a king post of a digger excavator, can be received. This provides an improved restraint against forward and sideways motion of the item of heavy machinery, and improves safety.

The combination of providing a forward deviation together with the first restraining bar being received by the first bar retainer at an inward face of the side walls, along with the placement of the first bar retainer, permits the first restraining bar to be low enough for a king post of the heavy machinery to be received by the recess formed by the forward deviation. This provides an improved restraint mechanism against motion of the king post.

The trailer can further comprise a lateral guide bar extending substantially laterally and along or substantially along the floor of the trailer. The lateral guide bar can aid the longitudinal positioning of the item of heavy machinery on the trailer. Additionally, the lateral guide bar can provide a restraint against forward motion of the item of heavy machinery.

The flat bed trailer can further comprise a pair of longitudinal guide bars extending substantially longitudinally and along or substantially along the floor of the trailer. The longitudinal guide bars can aid the lateral positioning of the item of heavy machinery on the trailer. Additionally, the longitudinal guide bars can provide a restraint against sideways (i.e. lateral) motion of the item of heavy machinery. The lateral guide bar can be raised with respect to the longitudinal guide bars, i.e. it can be substantially along the floor of the trailer. This can provide clearance above the floor of the trailer in which a part of the item of heavy machinery can be received. In combination, the lateral and longitudinal guide bars help to ensure that the item of heavy machinery is optimally positioned on the trailer to provide an optimal restraining effect.

The second bar retainer can be coupled on the top of at least one of the side walls. The second bar retainer can comprise a plurality of bar receiving elements, such as collars and jaws. Each of the bar receiving elements can be disposed on the top of or above the top of one of the side walls. The second restraining bar can be received by the second bar retainer (or bar receiving elements) on the top of or above the top of the side walls.

The second bar retainer can be substantially the same as the first bar retainer.

The second restraining bar is can be fully detachable from the trailer. The second restraining bar can be stepped. This increases the clearance of the bars, enabling better restraint to be provided, and provides a structure having greater strength than a linear bar. The second restraining bar can provide a restraint against backward motion of the item of heavy machinery when positioned on the flat bed trailer.

The flat bed trailer can further comprise a storage compartment for storing one or more of the first and/or second restraining bar. The storage compartment can be mounted on the inward face of one of the side walls. The storage compartment can be disposed between one of the longitudinal guide bars and an adjacent side wall. The storage compartment provides a convenient way to store the restraining bars.

The flat bed trailer can be suitable for transporting an item of heavy machinery having a movable arm attached to a bucket or a breaker. The item of heavy machinery can be a plant hire item, such as a mechanical digger, excavator, or forklift device. The item of heavy machinery might utilise caterpillar tracks, or might be a wheeled vehicle.

The flat bed trailer can further comprise an arm restraint assembly. The arm restraint assembly can comprise a pivotable restraining member for restraining a movable arm of the item of heavy machinery. The pivotable restraining member can comprise a pair of restraining elements disposable on either side of the arm of the item of heavy machinery. The pivotable restraining member can comprise a fastening mechanism for releasably coupling the pivotable restraining member to the arm of the item of heavy machinery.

The arm restraint assembly can further comprise a support platform for supporting the bucket of the item of heavy machinery. The support platform comprises an upstanding overhang for engaging with the bucket of the item of heavy machinery.

The trailer can further comprise a breaker housing for receiving and restraining a breaker. The breaker housing can comprise a fastening mechanism for releasably retaining a breaker within the breaker housing.

According to a second non-claimed example there is provided a flat bed trailer for transporting an item of heavy machinery having a movable arm attached to a bucket or a breaker, the flat bed trailer comprising:
a floor,
a plurality of wheels for travel over roads;
a coupling mechanism for coupling the trailer to a towing vehicle;
at least two restraining bars each having a restraining position in which the respective restraining bar is disposed substantially laterally across the trailer to restrain the item of heavy machinery when positioned on the flat bed trailer;
a first bar retainer for retaining one of the restraining bars in its restraining position;
a second bar retainer for releasably retaining the other restraining bars in its restraining position; and
an arm restraint assembly comprising a pivotable restraining member for restraining the movable arm of the item of heavy machinery.

It is understood that flat bed trailers do not have high-sided walls, although it is possible for flat bed trailers to have low walls, typically extending less than one metre and commonly less than 500 mm above the level of the trailer floor. The side walls can extend at least 300 mm above the level of the floor.

Also, it is understood that the term "bucket" relates to the scoop of a mechanical digger, or the like, which is used for excavating purposes. It is understood that the term "breaker" (also referred to as a "hammer", "pecker", or "hoe ram") relates to a device used to break apart a surface, such as concrete or rocks.

The at least two restraining bars can be a pair of spaced apart restraining bars. The restraining bars can be spaced apart by a distance of at least 750 mm. The restraining bars can be spaced apart so that in use a first of the restraining bars restrains a front portion of the item of heavy machinery, and a second of the restraining bars restrains a rear portion of the item of heavy machinery.

The arm restraint assembly can provide a restraint against motion of the movable arm in any direction during transportation. This can prevent unwanted swinging or movement of the arm during transportation, thereby significantly improving safety.

The flat bed trailer can further comprise a pair of longitudinally extending side walls. Each of the side walls in the pair can have an inward face. The first bar retainer can be coupled to the inward face of at least one of the side walls.

The pivotable restraining member can comprise a pair of restraining elements disposable on either side of the arm of the item of heavy machinery. The pair of restraining elements can form a recess into which the arm of the item of heavy machinery can be received.

The arm restraint assembly can be couplable to the arm of the item of heavy machinery. For example, the pivotable restraining member can comprise a fastening mechanism for releasably coupling the pivotable restraining member to the arm of the item of heavy machinery.

The fastening mechanism can comprise a locking pin. The locking pin can be disposable (e.g. slidable) through the pivotable restraining member (e.g. at least partially through the pair of restraining elements) so as to provide a releasable coupling between the pivotable restraining member and the arm of the item of heavy machinery, when in use. When the locking pin is disposed in this way (i.e. in its restraining position), the arm of the item of heavy machinery is restrained.

The locking pin can comprise an elongate shaft or rod, such as a substantially cylindrical shaft. The locking pin can comprise an elongate handle disposed at one end of the shaft. The elongate handle can extend substantially perpendicularly to the shaft. The shaft can comprise one or more protrusions extending radially outward.

The locking pin can be rotatable between a locked configuration and a release configuration. In the locked configuration, the locking pin (e.g. the one or more protrusions) engages with the pivotable restraining member to retain the locking pin in its restraining position. In the release configuration, the locking pin is disengaged with the pivotable restraining member so that the locking pin can be released from its restraining position.

In the locked configuration, the protrusions can engage with the pivotable restraining member. In the release configuration, the protrusions can be aligned with complementary apertures in the pivotable restraining member (e.g. the pair of restraining elements) to permit the locking pin to be inserted or removed. The locking pin can be biased towards the locked configuration. For example, the weight of the elongate handle can provide a moment which causes the locking pin to naturally reside in a particular rotational orientation, which can correspond to the locked configuration.

The arm restraint assembly can further comprise a support platform for supporting the bucket of the item of heavy machinery. The pivotable restraining member can be mounted on the support platform. The pivotable restraining member can pivot about the support platform. The pivotable restraining member can be mounted closer to one of the side walls than the other. That is, the pivotable member can be mounted off-centre from the longitudinal midpoint of the trailer.

The support platform can comprise an upstanding overhang for engaging with the bucket of the item of heavy machinery. The upstanding overhang can be a hooked or curled edge. The hooked edge typically overhangs a part of the support platform. The upstanding overhang (e.g. hooked edge) provides a restraint against backward and/or upwards movement of the bucket of the item of heavy machinery during transportation.

The flat bed trailer can further comprise a breaker housing for receiving and restraining a breaker. The breaker housing can be an elongate channel for receiving and restraining a breaker. The breaker housing can comprise a tapering elongate channel.

The breaker housing can comprise a fastening mechanism for releasably retaining a breaker within the breaker housing. The fastening mechanism of the breaker housing can be substantially of the same design as the fastening mechanism of the arm restraint assembly. For example, the fastening mechanism can comprise a locking pin. The locking pin can be rotatable between a locked configuration and a release configuration.

The locking pin can comprise an elongate handle disposed at one end of the shaft. The elongate handle can extend substantially perpendicularly to the shaft. The shaft can comprise one or more protrusions extending radially outward.

The locking pin can be rotatable between a locked configuration and a release configuration. The breaker housing can comprise apertures for receiving the locking pin in its release configuration. In the locked configuration, the locking pin (e.g. the one or more protrusions) engages with the breaker housing to retain the locking pin in position. In the release configuration, the locking pin is disengaged with the breaker housing so that the locking pin can be removed.

The locking pin can be biased towards the locked configuration. For example, the weight of the elongate handle can provide a moment which causes the locking pin to naturally reside in a particular rotational orientation, which can correspond to the locked configuration.

According to a third non-claimed example there is provided a flat bed trailer for transporting an item of heavy machinery, the flat bed trailer comprising:
a floor,
a plurality of wheels for travel over roads;
a coupling mechanism for coupling the trailer to a towing vehicle;
at least two restraining bars each having a restraining position in which the respective restraining bar is disposed substantially laterally across the trailer to restrain the item of heavy machinery when positioned on the flat bed trailer;
a first bar retainer for retaining one of the restraining bars in its restraining position;
a second bar retainer for releasably retaining the other restraining bars in its restraining position; and
a lateral guide bar extending substantially laterally and along or substantially along the floor of the trailer.

The lateral guide bar can aid the longitudinal positioning of the item of heavy machinery on the trailer. Additionally, the lateral guide bar can provide a restraint against forward motion of the item of heavy machinery.

The flat bed trailer can further comprise a pair of longitudinal guide bars extending substantially longitudinally and along or substantially along the floor of the trailer. The longitudinal guide bars can aid the lateral positioning of the item of heavy machinery on the trailer. Additionally, the longitudinal guide bars can provide a restraint against sideways (i.e. lateral) motion of the item of heavy machinery. The lateral guide bar can be raised with respect to the longitudinal guide bars. This can provide clearance above the floor of the trailer in which a part of the item of heavy machinery can be received. In combination, the lateral and longitudinal guide bars help to ensure that the item of heavy machinery is optimally positioned on the trailer to provide an optimal restraining effect.

According to a fourth non-claimed example there is provided a kit of parts for retrofitting to a flat bed trailer, the kit of parts comprising:
at least one bar retainer comprising a pair of bar retaining elements for coupling to an inward face of opposing side walls of the flat bed trailer;
fixings for coupling the pair of bar retaining elements to the opposing side walls; and
at least one restraining bar for being retained in the at least one bar retainer so that the restraining bar is disposed substantially laterally across the trailer between the opposing side walls of the flat bed trailer and so that the restraining bar is received by the first bar retainer at an inward face of at least one of the side walls.

The first bar retainer can be coupled to the inward face of at least one of the side walls. The first bar retainer can be located at an inward face of at least one of the side walls.

The fixings can comprise a plurality of bolts and/or screws for coupling the pair of bar retaining elements to the inward face of the opposing side wall.

The kit of parts can further comprise a breaker housing for receiving and restraining a breaker of an item of heavy machinery. The features of the breaker housing can be as described above.

The kit of parts can further comprise an arm restraint assembly for restraining a movable arm of an item of heavy machinery. The features of the arm restraint assembly can be as already described above.

According to a fifth non-claimed example there is provided a method of restraining an item of heavy machinery including the steps of:
providing a flat bed trailer according to the first example;
positioning the item of heavy machinery on the flat bed trailer;
disposing the first restraining bar in its restraining position, and disposing the second restraining bar in its restraining position.

According to a sixth non-claimed example there is provided a method of restraining an item of heavy machinery having a movable arm attached to a bucket or a breaker, the method comprising the steps of:
providing a flat bed trailer according to the second example;
positioning the item of heavy machinery on the flat bed trailer;
disposing the at least two restraining bars in their respective restraining positions to restrain the item of heavy machinery; and
coupling the arm restraint assembly to the movable arm of the item of heavy machinery so as to restrain the movable arm of the item of heavy machinery.

Whilst the invention has been described above, it extends to any combination of the features set out above, or in the following description, drawings or claims. For example, any features disclosed in relation to one aspect of the invention can be combined with any features disclosed in relation to any of the other aspects of the invention.

Embodiments of the invention will now be described, by way of example only, with reference to the accompanying drawings, in which:
Figures 1, 2 and 3 are perspective views of a flat bed trailer according to an embodiment of the invention;
Figure 4 is a view of a left side wall of a flat bed trailer according to an embodiment of the invention;
Figure 5 is a view of a right side wall of a flat bed trailer according to an embodiment of the invention;
Figures 6 and 7 are views of a first bar retainer;
Figure 8 is a view of a first restraining bar in its restraining position;
Figures 9 and 10 are views of an arm restraint assembly;
Figures 11 and 12 are views of a fastening mechanism for coupling an arm restraint assembly to an arm of an item of heavy machinery;
Figure 13 is a view of a breaker housing;
Figure 14 is a side view of a breaker housing;
Figures 15 and 16 are views of a fastening mechanism for retaining a breaker in the breaker housing;
Figure 17 is a view of an item of heavy machinery positioned on the flat bed trailer;
Figure 18 is a view of a bucket being supported on a bucket support;
Figure 19 is a view of a pivotable arm member coupled to an arm of an item of heavy machinery.

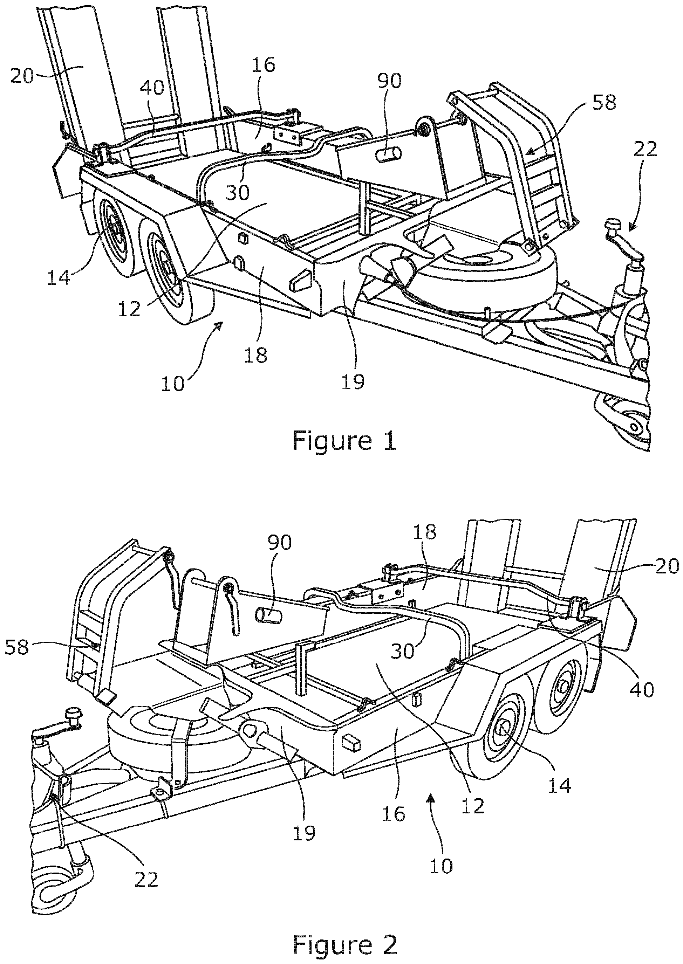

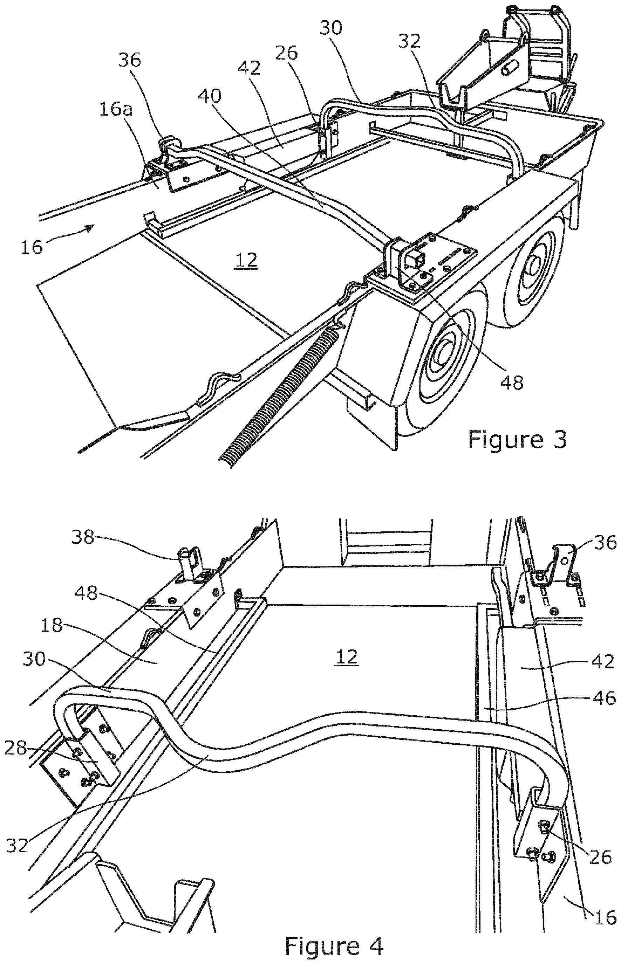

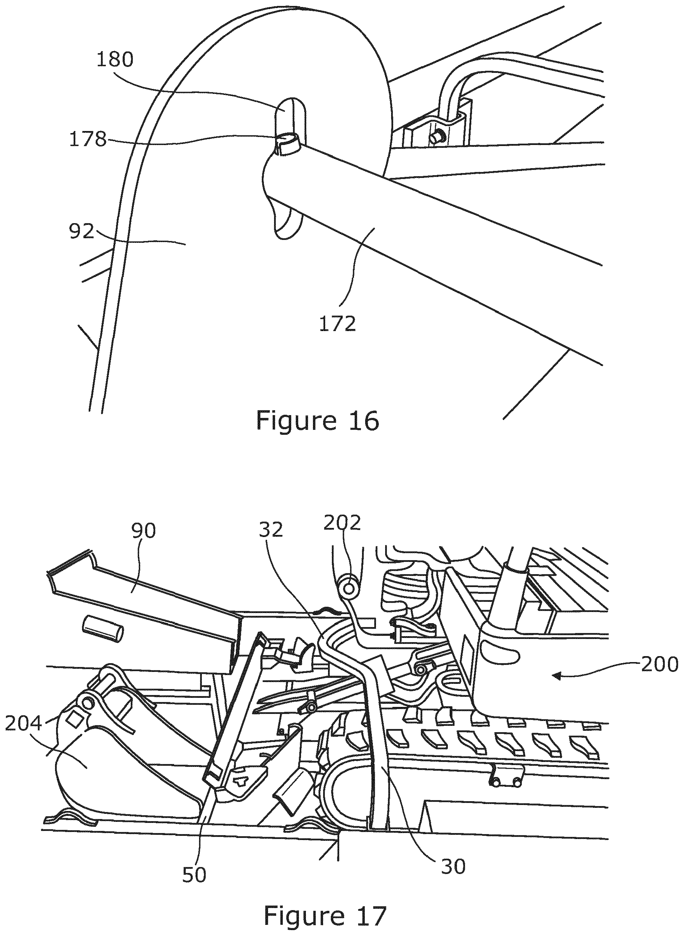

Figures 1 to 4 show a flat bed trailer 10 of an embodiment of the invention. The main body of the flat bed trailer 10 is of conventional design, having a floor 12, road-engaging wheels 14, and low, parallel side walls 16, 18, and front wall 19. The flat bed trailer 10 further comprises a releasable back wall, such as ramp 20, which permits an item of heavy machinery 200 (shown in Figure 17) to be driven onto the floor 12 of the trailer 10. The trailer 10 further comprises a front coupling mechanism 22 which enables the flat bed trailer 10 to be coupled to a suitable towing vehicle such as a van or lorry (not shown).

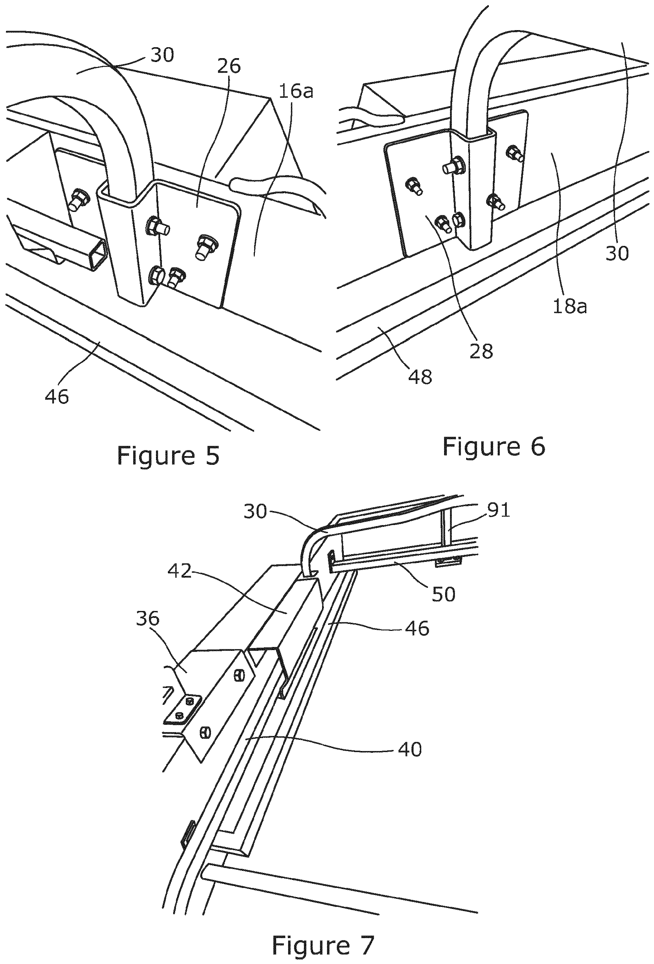

The flat bed trailer 10 further comprises a front pair of brackets 26, 28, which act as a front bar retainer for the front restraining bar 30. The front brackets 26, 28 are coupled by way of bolts to an inward face of the side walls 16a, 18a respectively (as shown in Figures 5 and 6). The inward face of the side walls 16a, 18a is the substantially vertical face that faces towards the interior of the trailer 10. The front brackets 26, 28 are fully contained below the top of the side walls 16, 18 so that the brackets 26, 28 do not protrude above the top of the side walls 16, 18. Disposing the front brackets 26, 28 so that they do not protrude above the top of the side wall 16, 18 removes a potential trip or snag hazard on the trailer, thereby improving safety. This also enables the front restraining bar 30 to be positioned lower, which can provide an improved restraint mechanism. The front brackets 26, 28 form a sleeve which can receive and retain an end of the front restraining bar 30. The front restraining bar 30 is vertically movable within the sleeve of the front brackets 26, 28 so that the restraining bar 30 can be retained within the brackets 26, 28 in a height adjustable manner. A bolt passing through a complementary hole in the restraining bar can be used to retain the front restraining bar 30 in a fixed position. In some embodiments, the front restraining bar 30 is completely removable from the brackets 26, 28. In other embodiments, one or both ends of the front restraining bar 30 are permanently attached to the brackets 26, 28. In some embodiments, the front restraining bar 30 is swingable or pivotable.

The front restraining bar 30 provides a restraint against forward movement of an item of heavy machinery positioned on the trailer 10. The front restraining bar 30 comprises a metal bar. The front restraining bar 30 comprises a forward deviation or kink 32. The kink 32 is disposed substantially at a midpoint of the restraining bar 30. Where an item of heavy machinery comprises a front arm, such as a digger or excavator, a part of the heavy machinery, such as a king post 202, can be received by the kink 32 (as shown in Figure 17). The combination of mounting the brackets 26, 28 to the side walls 16, 18 and providing a kink 32 in the front restraining bar 30 enables the restraining bar 30 to be low enough so that the king post 202 can be adequately restrained. Therefore, the present invention can provide an improved restraint mechanism for items of heavy machinery that comprise a front arm.

The flat bed trailer 10 further comprises a back pair of brackets 36, 38, which act as a back bar retainer for the back restraining bar 40. The back bracket 36 is mounted by way of bolts on to the top of the side wall 16b. The back bracket 38 is mounted by way of bolts on to the top of the side wall 18b. The bracket 36 has a pair of spaced apart jaws upstanding therefrom, and the bracket 38 has a pair of spaced apart collars upstanding therefrom. The back restraining bar 40 extends sideways (i.e. laterally) across the flat bed trailer 10. The back restraining bar 40 provides a restraint against backward movement of an item of heavy machinery positioned on the trailer 10. One end of the bar 40 is located in a collar, and the other end of the bar 40 is located in a jaw, this positioning acting to secure the back bar 40 in place. Typically, the back restraining bar 40 is fully detachable from the brackets 36, 38. WO2007/129054, the entire contents of which is hereby incorporated by reference, discloses brackets and restraining bars which are suitable for use as the back brackets 36, 38 and the back restraining bar 40 respectively.

The trailer 10 further comprises a storage compartment 42 mounted to a side wall 16 of the trailer 10. The storage compartment 42 can be used to store the back restraining bars 40 (and/or optionally the front restraining bar 30) when detached from the respective brackets. The storage compartment 42 provides a convenient way to safely store the restraining bar when not in use.

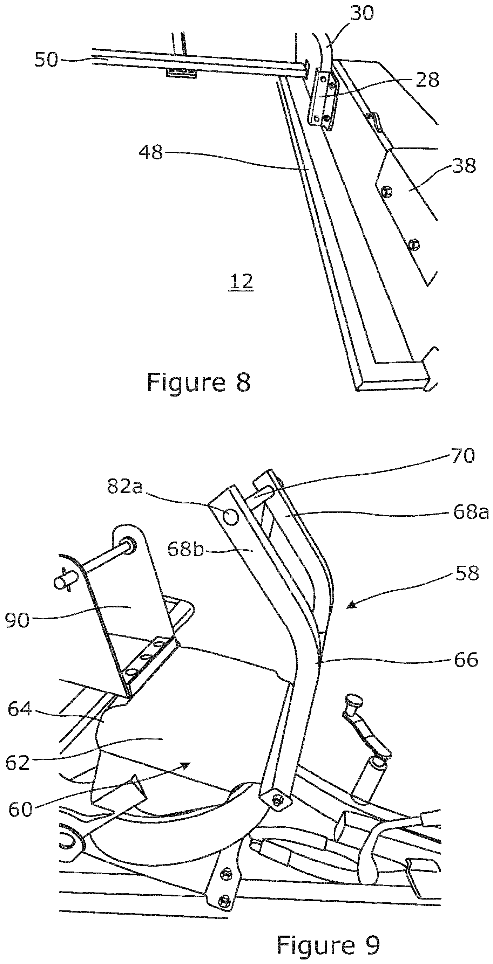

As shown in Figures 7 and 8, the trailer 10 further comprises a pair of longitudinal guide bars 46, 48 which extend substantially parallel to the side walls 16, 18 along the floor 12 of the trailer 10. The guide bars 46, 48 provide a restraint against sideways (or lateral) motion of the item of heavy machinery during transportation, and have an additional advantage in aiding the lateral positioning of the item of heavy machinery on the trailer 10.

The trailer 10 further comprises a lateral guide bar 50, which extends substantially laterally along or close to the floor 12 across the trailer between the side walls 16, 18. The lateral guide bar 50 is disposed towards the front end of the trailer 10 (i.e. the end nearest the towing vehicle) to provide a restraint against forward motion of the item of heavy machinery during transportation. Additionally, the lateral guide bar 50 has the additional advantage in aiding the longitudinal positioning of the item of heavy machinery on the trailer 10. For example, the lateral guide bar 50 helps to position the item of heavy machinery in the correct longitudinal position so that the front and back restraining bars 30, 40 have maximal restraining effect. The lateral guide bar 50 can be positioned sufficiently far away from the front wall 19 of the trailer so that a bucket 204 can be positioned between the front wall 19 and the lateral guide bar 50 when detached from the arm of the item of heavy machinery (as shown in Figure 17). This provides a convenient storage area and better utilises space on the trailer 10. The lateral guide bar 50 can be slightly raised with respect to the longitudinal guide bars 46, 48. This can provide clearance above the floor of the trailer in which a part of the item of heavy machinery can be received.

The trailer 10 further comprises an arm restraint assembly 58 for restraining the arm of the item of heavy machinery. For example, the trailer 10 further comprises a bucket support 60 for supporting a bucket 206 of a mechanical digger during transportation. The bucket support 60 is typically mounted forward of the front wall 19 of the trailer 10, for example, the bucket support 60 can be mounted on the front coupling mechanism 22.

The bucket support 60 comprises a substantially horizontal plate or platform 62. A back edge of the plate 62 (i.e. the edge of the plate furthest from the towing vehicle) is upstanding from the plate 62 to form a hook 64. The hook 64 provides a restraint against backward and/or upward motion of the bucket when in use. Furthermore, the hook can also provide a support surface for the breaker housing 90 discussed in more detail below.

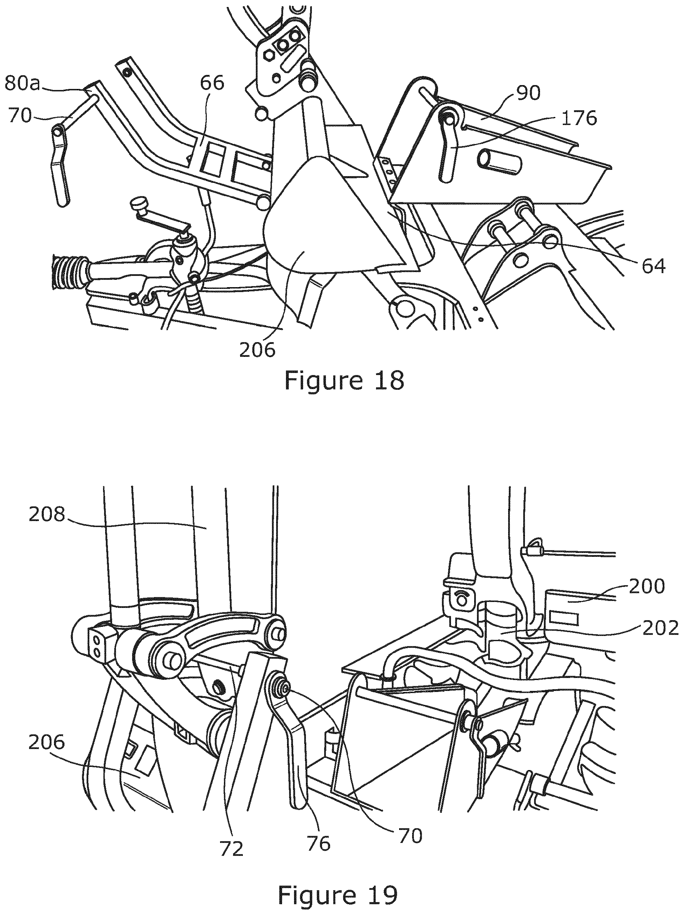

The bucket support 60 further comprises a pivotable front restraint 66 mounted towards or at a front edge of the plate 62. The pivotable front restraint 66 is typically mounted to be off-centre. This can be beneficial because the front arm of the item of heavy machinery may not be centralised, and therefore the front restraint 66 can better receive the front arm of the item of heavy machinery. The pivotable front restraint 66 can be a pivotable solid wall, but is preferably a frame. The frame typically comprises two spaced apart frame members 68a, 68b. A frame can provide weight and manufacturing cost benefits. The front restraint 66 is pivotable between an open position and a locking position. In use, the arm of the item of heavy machinery is positioned so that the bucket rests on the bucket support 60. The ground engaging edge of the bucket 206 can engage with the hook 64 (as shown in Figure 18). The pivotable front restraint 66 is moved from the open position to the locking position. In use, a locking mechanism 70 is used to couple the front restraint 66 to the arm of the item of heavy machinery. In one embodiment, a pin 72 is inserted laterally through a hole in the hydraulic mechanism of the bucket to lock the dipper to the front restraint 66 (as shown in Figure 19). In this way, the front restraint 66 provides a restraint against motion of the arm (or dipper) 208 in any direction.

The locking mechanism 70 is shown in more detail in Figures 9 to 12. The pin 72 comprises a substantially cylindrical rod 74 and an elongate handle 76 securely attached at a first end of the rod 74. The handle 76 extends perpendicularly to the rod 74. When the rod 74 is free to rotate, the weight of the handle is such that the handle will naturally reside pointing downwardly. The rod 74 further comprises at least one protrusion, optionally a pair of protrusions 78, at or near to the second end of the rod. The pair of protrusions 78 help to lock the pin 72 in position.

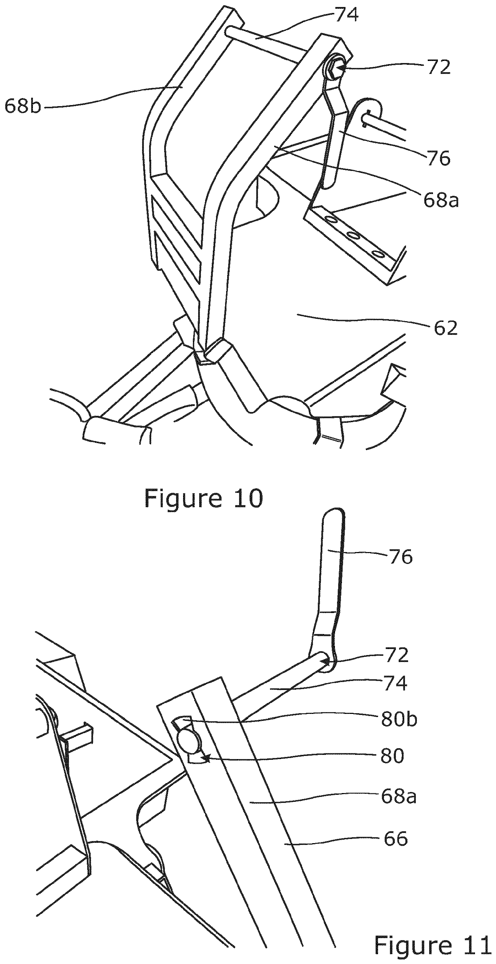

The first frame member 68a comprises an aperture 80 extending laterally through the first frame member 68a. The outward face 80a of the aperture 80 is substantially circular in cross-section to allow the pin 72 to slide therethrough. However, the diameter of the cross-section of aperture is sized to prevent the protrusions 78 passing therethrough. The inward face 80b of the aperture comprises a rotationally variable diameter so that the protrusions 78 may only pass through the inward facing aperture 80b when correctly aligned. For example, as shown in Figure 11, the aperture 80b can comprises a first substantially circular cut-out portion and at least one second cut-out portion corresponding to a sector of a concentric circle of large diameter.

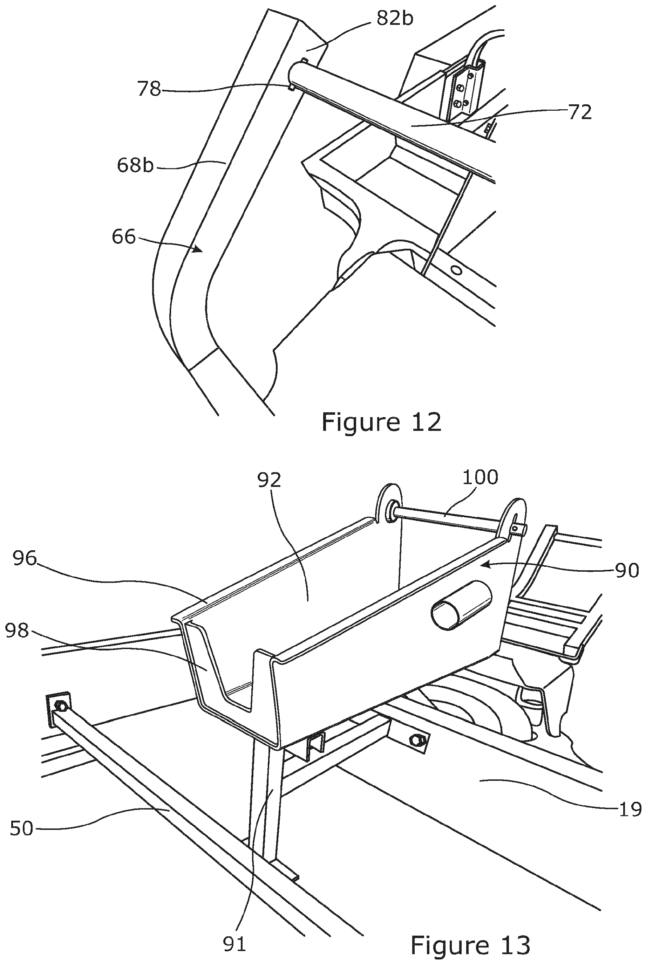

The second frame member 68b comprises an aperture 82 extending laterally through the first frame member 68b. The outward face 82a of the aperture 82 is substantially circular in cross-section to allow the pin 72 to slide therethrough. However, the diameter of the cross-section of aperture 82a is sized to prevent the protrusions 78 passing therethrough. The inward face 82b of the aperture comprises a rotationally variable diameter so that the protrusions 78 may only pass through the inward facing aperture 82b when correctly aligned. For example, as shown in Figure 12, the aperture 82b can comprise a first substantially circular cut-out portion and at least one second cut-out portion corresponding to a slot that extends radially outwards.

The locking mechanism is configured such that when the handle 76 is disposed substantially downwardly, the protrusions 78 are misaligned with the aperture, and the pin 72 is locked in position. In a preferred embodiment, rotating the pin 72 by approximately 90 ° causes the protrusions 78 to align with the apertures 80b, 82b so that the pin 72 can be removed or inserted into its locked or unlocked position. This mechanism provides a convenient way to securely fasten the arm of the item of heavy machinery during transportation without requiring any moving parts.

In some further embodiments, the rod 74 can optionally further comprise an aperture for receiving a lynch pin (not shown) to provide an additional locking mechanism.

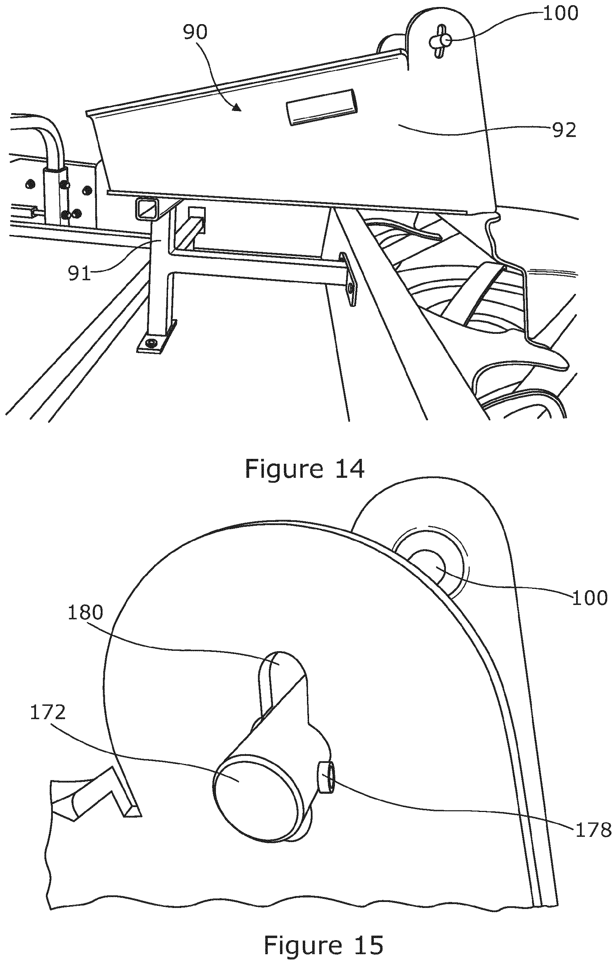

As shown in Figures 13 to 16, the trailer further comprises a breaker housing 90 suitable for housing a breaker, such as a hydraulic breaker (not shown). Breakers are also referred to "hammers", "peckers", or "hoe rams". Breakers are heavy, typically weighing about 95 kg, and are therefore difficult to move manually. Furthermore, improper restraining of a breaker during transportation can be hazardous. The housing 90 provides a convenient means for storing a breaker when it is not being used and/or safely restraining it when the item of heavy machinery is being transported on the trailer 10. The housing 90 can prevent the breaker moving or swinging during transit, which significantly improves the safety of the trailer 10. Furthermore, the breaker can be attached and detached from the end of the excavating arm without requiring any manual handling.

The breaker housing 90 is mounted to the floor 12 of the trailer 10 via a support prop 91. The breaker housing 90 can optionally be mounted to the front coupling mechanism 22, for example, by mounting on the hook 64 or support plate 62.

The breaker housing 90 is shaped and configured to receive a breaker (not shown). The breaker housing 90 is not suitable for receiving a bucket of a mechanical digger. The breaker housing 90 is formed as an elongate channel having an open top. Using a channel with an open top can help to more easily position a breaker within the breaker housing 90. The channel comprises a base 92 and a pair of tapered side walls 92. The top of the side walls 92 comprises a flange 96. The flange can help to impart mechanical strength to the breaker housing 90 to prevent buckling and deformation. A nose plate 98 is disposed between the narrow end of the side walls 92. The nose plate 98 comprises an opening to allow the breaker to extend therethrough.

The breaker housing 90 further comprises a locking mechanism 100. The locking mechanism 100 can be substantially the same locking mechanism 70 described above. For example, each side wall 92 of the breaker housing 90 can comprise an aperture 180. The locking mechanism 100 can comprise a pin 172, an elongate handle 176 and a pair of protrusions 178, which work in substantially the same way as locking mechanism 70. The locking mechanism 100 provides a convenient and cost-effective way to safely secure a breaker within the breaker housing 90.

The breaker housing 90 provides a secure restraint against motion of the breaker (and dipper, when attached) in any direction during transportation. This significantly improves the safety of the trailer when carrying a breaker.

## Claims

1. A flat bed trailer (10) for transporting an item of heavy machinery having a moveable arm attached to a bucket or a breaker, the flat bed trailer comprising:
a floor (12),
a plurality of wheels (14) for travel over roads;
a coupling mechanism (22) for coupling the trailer to a towing vehicle;
at least two restraining bars (30, 40) each having a restraining position in which the respective restraining bar is disposed substantially laterally across the trailer to restrain the item of heavy machinery when positioned on the flat bed trailer;
a first bar retainer (26, 28) for retaining one of the restraining bars (30) in its restraining position; and
a second bar retainer (36, 38) for releasably retaining the other restraining bar (40) in its restraining position;
**characterised in that** the flat bed trailer comprises a breaker housing (90) for receiving and restraining the breaker of the item of heavy machinery, and a support prop (91),
the breaker housing (90) being mounted to the floor (12) of the trailer via said support prop (91).

2. A flat bed trailer according to claim 1 in which the breaker housing comprises an elongate channel for receiving and restraining the breaker.

3. A flat bed trailer according to claim 2 in which the channel is a tapering elongate channel.

4. A flat bed trailer according to any of claims 1-3 in which the breaker housing comprises a fastening mechanism (100) for releasably retaining the breaker within the breaker housing.

5. A flat bed trailer according to claim 4 in which the fastening mechanism comprises a locking pin (172).

6. A flat bed trailer according to claim 5 in which the locking pin comprises an elongate shaft or rod, optionally a substantially cylindrical shaft.

7. A flat bed trailer according to claims 6 in which the locking pin comprises an elongate handle (176) at one end of the shaft.

8. A flat bed trailer according to claim 7 in which the elongate handle extends substantially perpendicularly to the shaft.

9. A flat bed trailer according to any of claims 5-8 in which the locking pin is rotatable between a locked configuration and a release configuration.

10. A flat bed trailer according to claim 9 in which the breaking housing comprises apertures for receiving the locking pin in its release configuration.

11. A flat bed trailer according to claim 9 or 10 wherein in the locking configuration the locking pin engages with the breaker housing to retain the locking pin in position.

12. A flat bed trailer according to any of claims 9-11 when dependent on any of claim 6-8 in which the shaft comprises one or more protrusions (178) extending radially outward.

13. A flat bed trailer according to claim 12 wherein in the locking configuration the one or more protrusions (178) engage with the breaker housing to retain the locking pin in position.

14. A flat bed trailer according to any of claims 9-13 wherein in the release configuration the locking pin is disengaged from the breaker housing so that the locking pin can be removed.

15. A flat bed trailer according to any of claims 9-14 in which the locking pin is biased towards the locked configuration.

## Patentansprüche

1. Pritschenanhänger (10) zum Transportieren einer schweren Maschineneinheit, die einen beweglichen Arm aufweist, der an einer Schaufel oder einem Brecher angebracht ist, der Pritschenanhänger umfassend:
einen Boden (12),
eine Vielzahl von Rädern (14) zum Fahren über Straßen;
einen Kopplungsmechanismus (22) zum Koppeln des Anhängers mit einem Zugfahrzeug;
mindestens zwei Rückhaltestangen (30, 40), die jeweils eine Rückhalteposition aufweisen, in der die jeweilige Rückhaltestange im Wesentlichen seitlich quer über dem Anhänger angeordnet ist, um die schwere Maschineneinheit zurückzuhalten, wenn sie auf dem Pritschenanhänger positioniert ist;
einen ersten Stangenhalter (26, 28) zum Zurückhalten der ersten Rückhaltestange (30) in ihrer Rückhalteposition; und
einen zweiten Stangenhalter (36, 38) zum lösbaren Halten der anderen Rückhaltestange (40) in ihrer Rückhalteposition,
**dadurch gekennzeichnet, dass** der Pritschenanhänger ein Brechergehäuse (90) zum Aufnehmen und Zurückhalten des Brechers der schweren Maschineneinheit und eine Trägerstütze (91) umfasst,
wobei das Brechergehäuse (90) auf dem Boden (12) des Anhängers über die Trägerstütze (91) montiert ist.

2. Pritschenanhänger nach Anspruch 1, wobei das Brechergehäuse einen länglicher Kanal zum Aufnehmen und Zurückhalten des Brechers umfasst.

3. Pritschenanhänger nach Anspruch 2, bei dem der Kanal ein sich verjüngender, länglicher Kanal ist.

4. Pritschenanhänger nach einem der Ansprüche 1 bis 3, wobei das Brechergehäuse einen Befestigungsmechanismus (100) zum lösbaren Halten eines Brechers innerhalb des Brechergehäuses umfasst.

5. Pritschenanhänger nach Anspruch 4, wobei der Befestigungsmechanismus einen Verriegelungsstift (172) umfasst.

6. Pritschenanhänger nach Anspruch 5, wobei der Verriegelungsstift einen länglichen Schaft oder eine Stange, optional einen im Wesentlichen zylindrischen Schaft umfasst.

7. Pritschenanhänger nach Anspruch 6, wobei der Verriegelungsstift einen länglichen Griff (176) an einem Ende des Schafts umfasst.

8. Pritschenanhänger nach Anspruch 7, wobei sich der längliche Griff im Wesentlichen senkrecht zu dem Schaft erstreckt.

9. Pritschenanhänger nach einem der Ansprüche 5 bis 8, wobei der Verriegelungsstift zwischen einer verriegelten Konfiguration und einer gelösten Konfiguration drehbar ist.

10. Pritschenanhänger nach Anspruch 9, wobei das Bremsgehäuse Öffnungen zum Aufnehmen des Verriegelungsstifts in seiner Freigabekonfiguration umfasst.

11. Pritschenanhänger nach Anspruch 9 oder 10, wobei in der Verriegelungskonfiguration der Verriegelungsstift in das Brechergehäuse eingreift, um den Verriegelungsstift in Position zu halten.

12. Pritschenanhänger nach einem der Ansprüche 9 bis 11, sofern abhängig von einem der Ansprüche 6 bis 8, wobei der Schaft einen oder mehrere sich radial nach außen erstreckende Vorsprünge (178) umfasst.

13. Pritschenanhänger nach Anspruch 12, wobei in der Verriegelungskonfiguration der eine oder die mehreren Vorsprünge (178) mit dem Brechergehäuse eingreifen, um den Verriegelungsstift in Position zu halten.

14. Pritschenanhänger nach einem der Ansprüche 9 bis 13, wobei in der Freigabekonfiguration der Verriegelungsstift aus dem Brechergehäuse gelöst ist, sodass der Verriegelungsstift entfernt werden kann.

15. Pritschenanhänger nach einem der Ansprüche 9 bis 14, wobei der Verriegelungsstift zu der verriegelten Konfiguration hin vorgespannt ist.

## Revendications

1. Remorque-plateau (10) permettant de transporter un élément de machinerie lourde ayant un bras mobile attaché à un godet ou à un brise-roche, la remorque-plateau comprenant :
un plancher (12),
une pluralité de roues (14) pour un déplacement sur des routes ;
un mécanisme d'accouplement (22) permettant d'accoupler la remorque à un véhicule remorqueur ;
au moins deux barres d'immobilisation (30, 40) ayant chacune une position d'immobilisation dans laquelle la barre d'immobilisation respective est disposée sensiblement latéralement à travers la remorque pour immobiliser l'élément de machinerie lourde lorsqu'il est positionné sur la remorque-plateau ;
un premier élément de retenue de barre (26, 28) permettant de retenir l'une des barres d'immobilisation (30) dans sa position d'immobilisation ; et
un second élément de retenue de barre (36, 38) permettant de retenir de manière libérable l'autre barre d'immobilisation (40) dans sa position d'immobilisation ;
**caractérisée en ce que** la remorque-plateau comprend un boîtier de brise-roche (90) permettant de recevoir et d'immobiliser le brise-roche de l'élément de machinerie lourde, et un étai de support (91),
le boîtier de brise-roche (90) étant monté sur le plancher (12) de la remorque par l'intermédiaire dudit étai de support (91).

2. Remorque-plateau selon la revendication 1, dans laquelle le boîtier de brise-roche comprend un canal allongé permettant de recevoir et d'immobiliser le brise-roche.

3. Remorque-plateau selon la revendication 2, dans laquelle le canal est un canal allongé effilé.

4. Remorque-plateau selon l'une quelconque des revendications 1 à 3, dans laquelle le boîtier de brise-roche comprend un mécanisme de fixation (100) permettant de retenir de manière amovible le brise-roche à l'intérieur du boîtier de brise-roche.

5. Remorque-plateau selon la revendication 4, dans laquelle le mécanisme de fixation comprend une goupille de verrouillage (172).

6. Remorque-plateau selon la revendication 5, dans laquelle la goupille de verrouillage comprend un arbre allongé ou une tige allongée, facultativement un arbre sensiblement cylindrique.

7. Remorque-plateau selon la revendication 6, dans laquelle la goupille de verrouillage comprend une poignée allongée (176) au niveau d'une extrémité de l'arbre.

8. Remorque-plateau selon la revendication 7, dans laquelle la poignée allongée s'étend sensiblement perpendiculairement à l'arbre.

9. Remorque-plateau selon l'une quelconque des revendications 5 à 8, dans laquelle la goupille de verrouillage peut tourner entre une configuration verrouillée et une configuration de libération.

10. Remorque-plateau selon la revendication 9, dans laquelle le boîtier de brise-roche comprend des ouvertures permettant de recevoir la goupille de verrouillage dans sa configuration de libération.

11. Remorque-plateau selon la revendication 9 ou 10, dans laquelle, dans la configuration de verrouillage, la goupille de verrouillage vient en prise avec le boîtier de brise-roche pour retenir la goupille de verrouillage en position.

12. Remorque-plateau selon l'une quelconque des revendications 9 à 11, lorsqu'elle dépend de l'une quelconque des revendications 6 à 8, dans laquelle l'arbre comprend une ou plusieurs saillies (178) s'étendant radialement vers l'extérieur.

13. Remorque-plateau selon la revendication 12, dans laquelle, dans la configuration de verrouillage, la ou les saillies (178) viennent en prise avec le boîtier de brise-roche pour retenir la goupille de verrouillage en position.

14. Remorque-plateau selon l'une quelconque des revendications 9 à 13, dans laquelle, dans la configuration de libération, la goupille de verrouillage est désolidarisée du boîtier de brise-roche, de sorte que la goupille de verrouillage peut être retirée.

15. Remorque-plateau selon l'une quelconque des revendications 9 à 14, dans laquelle la goupille de verrouillage est sollicitée vers la configuration verrouillée.
